# EUROPEAN PATENT SPECIFICATION

(11) **EP 0 611 970 B1**
(45) Date of publication and mention of the grant of the patent: **13.05.1998**
(21) Application number: 94102347.5
(22) Date of filing: 16.02.1994
(51) Int. Cl.: G01V 3/10

(54) **Multiple aerial for metal detector**
Mehrfachantenne für ein Metallsuchgerät
Pluralité d'antennes pour un détecteur de métaux

(30) Priority: 17.02.1993 IT AR930003
(43) Date of publication of application: 24.08.1994
(73) Proprietor: Ceccherini, Luciano, I-52020 Pergine Valdarno (IT)
(72) Inventor: Ceccherini, Luciano, I-52020 Pergine Valdarno (IT)
(74) Representative: Bardini, Marco Luigi

(56) References cited:
- DE-A- 3 225 166
- FR-A- 2 607 937

## Description

The present invention relates to a multiple type antenna for metal detectors.

More precisely, the invention relates to a column type antenna which can be used both as a transmitter and a receiver in a device for detecting the movement of metal objects, such as fire-arms, through passageways of guarded places (banks, jewelry stores, airports and the like).

The transmission and reception antennas of currently available detectors are basically of two types. The first is a two-dimensional, rectangular form with coils which alternate to produce discordant magnetic polarities in order to attenuate the effects induced by external parasitic fields, with a reduction of the disturbances originating from a certain preferential direction.

The second type is a cylindrical form with coils which constitute a helicoid winding so that they originate discordant magnetic polarities in order to attenuate disturbances coming from any direction.

In both types of detectors an electric screen is provided for composed of a winding which follows the coils with its beginning connected to ground and its end left free; this is done to reduce the parasitic effects introduced by possible electrostatic effects.

In both solutions the alternation of the magnetic polarities in the windings make it so that the external parasitic electromagnetic fields have alternatively discordant induced effects and can therefore be attenuated. Furthermore, in both solutions, along the generatrices of the flat and cylindrical antennas, the electromagnetic field irradiated by the transducer, used as a transmitter, changes intensity reaching minimum values in correspondence with the inversion of the magnetic polarity.

In those areas of minimum irradiation, improperly called "magnetic holes", the intensity of the electromagnetic field is so low that it induces, in a hypothetical metallic object crossing such an area, induced currents that are too weak to produce secondary inertial effects in the receiving transducer sufficient to produce an alarm. In other words, a metallic object, and naturally a weapon, can pass through these areas without being detected.

While in the two-dimensional rectangular solution with flat coils the point in which the intensity of the electromagnetic field is too weak is well-defined by the geometry of the winding, in the solution of cylindrical form, with coils constituting a helicoid winding, that minimum field point can be translated along the generatrices of the support, rotating the antenna around the axis of the cylinder that supports the winding.

In both of the antenna solutions, the structure of the windings is such that there is a well-defined lobe of radiation; in practice, it is not possible to eliminate the areas of minimum electromagnetic field irradiated from the transducer, used as a transmitter, or those areas in which moving metallic objects produce, in the transducer used as a receiver, secondary inertial effects that are negligible with respect to other points, nor is it possible to considerably reduce the secondary inertial effects deriving from external parasitic fields.

An example of a cylindrical antenna is shown in FR-A-2 607 937 which comprises a cylindrical support and a plurality of winding arranged as coaxial helixes. An embodiment of the cylindrical antenna shown in this document teaches (figures 3 and 4) that a plurality of partial cylindrical antennas may be stacked the one over the other in order to constitute a composite cylinder with a common axis. The field is perpendicular to the axis of the cylinder. In DE-A-3225166 a metal detector is disclosed comprising flat concentrical coils which set up a directional field parallel to the axis of the coils and that operates as a differential transducer and having a nul point in correspondence with the center of the concentric coils.

The main objective of the present invention is to provide a multiple type antenna for metal detectors allowing for the obviation of the above-described inconveniences being able, through the reciprocal movement of individual windings, to vary the lobe of radiation.

A particular object of the present invention is to provide an antenna of the above-mentioned type realized in the form of a column along the generatrices of which, when the transducer is used as a transmitter, no point exists wherein the electromagnetic field has a null or negligible intensity with respect to the other points.

A further object of the present invention is to provide an antenna of the above-mentioned type which has characteristics versatile enough to allow both for the optimization of its operation in any installation eliminating those areas wherein, when the transducer is used as a receiver, moving metal objects produce negligible secondary inertial effects and for the reduction of the secondary inertial effects produced by electromagnetic disturbances extraneous to the system.

These objects are accomplished by the antenna for a metal detector as stated in the characterizing portion of claim 1.

Each part of the antenna, constituted by the individual cylindrical support along with the individual winding, can be rotated or translated with respect to the other partial antennas so as to compensate for the points in which the intensity of the electromagnetic field irradiated by the transducer, used as a transmitter, is too weak and to reduce to a minimum its capacity to intercept spurious parasitic disturbances, on the part of the transducer used as a receiver, which originate from a certain preferential direction; in this way the use of the transducers is considerably optimized.

The present invention will be made more apparent in the description which follows with reference to the attached drawings in which:
- figure 1 shows schematically three sets of helicoid or flat coils forming the windings for the antenna;
- figure 2 shows schematically the forms of the two types of supports respectively supporting three sets of coils (6, 7 e 8) and a protection from external mechanical stress (5);
- figure 3 shows schematically an embodiment according to which the three individual antennas are positioned concentrically to one another where the cylindrical supports have the same length but different diameters;
- figure 4 shows schematically an embodiment according to which the three individual antennas are concentrically positioned but translated with respect to one another where the cylindrical supports have different lengths and diameters.

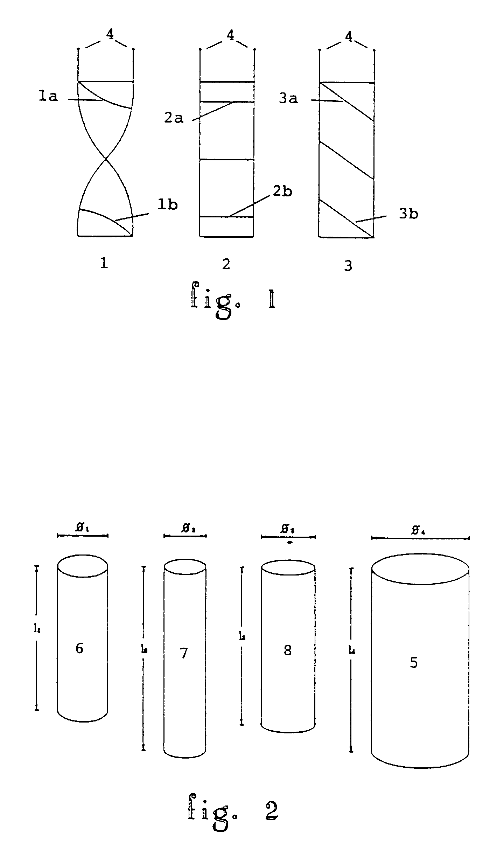

With reference to figure 1, reference numbers 1, 2 and 3 indicate three sets of coils connected to an electric power supply (not shown) by means of electric terminals 4. The sets of coils can be helicoid or flat.

With the object of intensifying the electromagnetic field in correspondence with the extremities of the cylindrical support in order to obtain almost constant field values, two sets of auxiliary coils also of helicoid or flat form, indicated in figure 1 by 1a, 1b, 2a, 2b, 3a and 3b, are placed respectively on the upper and lower terminal portions of the coils 1, 2 and 3.

With reference to figure 2, numbers 6, 7 and 8 indicate the support posts of the three sets of coils and 5 indicates the support of mechanical protection of the multiple antenna; the various supports have a tubular form of not necessarily equal length and diameter and are made in insulating material so that they influence neither the spatial distribution of the electromagnetic field nor the energetic balance of the same variable field of a frequency suitable for the particular application.

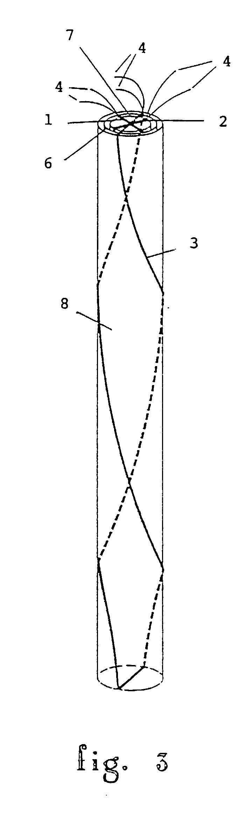

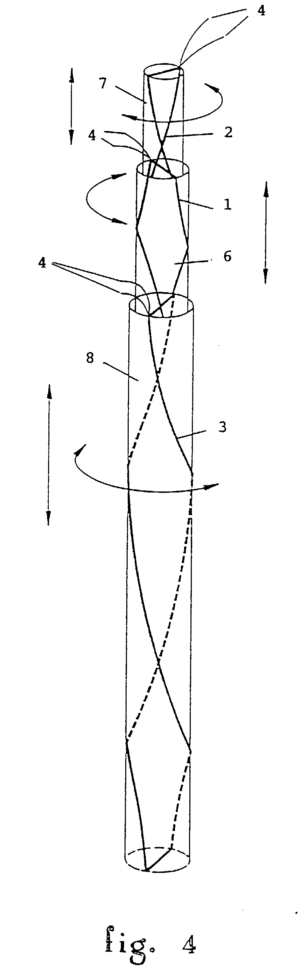

Using the present antenna as a transmitter, with reference to figures 3 and 4, the three windings 1, 2 and 3 can be individually rotated or vertically translated in order to avoid the minima of the electromagnetic field that occur in correspondence with the inversion of polarity of each winding; this can be achieved in particular by making correspond for example, the maximum value of the electromagnetic field produced by the winding 2 in the area in which there is found the minimum value of the electromagnetic field, produced for example by the winding 3, and possibly reinforce a certain area for the interception in particular applications by means of the remaining winding 1.

In this way, the intensity of the field is such that on the entire support 5 there is no point where moving metallic objects produce secondary inertial effects that are negligible with respect to the other points.

Using the antenna as a receiver, with reference to figures 3 and 4, the three windings 1, 2 and 3 can be individually rotated or vertically translated so as to improve the ratio between the signal deriving from the secondary inertial effects caused by moving metallic objects and the background noise generated by the electronic components and the environment as well as to reduce to a minimum, consistently with the environmental conditions, the parasitic effects derived from external disturbances: this can be achieved in particular by rotating the winding 1 until completely eliminating the environmental disturbances coming from a particular direction and rotating the windings 2 and 3 to the point of obtaining the conditions of maximum value of the signal and therefore minimum value of the noise/signal ratio.

It is important to note that this multiple antenna, with respect to already known antennas, requires less excitation power and a smaller number of coils.

The multiple antenna is enclosed in an external envelop or container 5, and the supports 6, 7 and 8 for the windings 1, 2 and 3 are mechanically connected to one another, in a way that is obvious to an expert in the field, so as to allow for their mutual translation and/or rotation.

## Claims

1. Antenna of multiple type for a metal detector comprising a plurality of single antenna elements having a helicoid winding wound over a cylindrical support, said helicoid winding extending over the whole extension of said cylindrical support, characterized in that said antenna elements have windings (1, 2, 3) wound on cylindrical supports constituted of hollow cylinders (6, 7, 8) that are arranged substantially concentrically the one into the other, and that said hollow cylinders (6, 7, 8) are singly rotatable around their axis and/or shiftable along it, whereby an adjustment of the transmitting and/or receiving characteristics may be obtained through a rotational positioning and/or shifting of each hollow cylinder (6, 7, 8) with respect to the other (-s), in order to maximize the detection capabilities of the metal detector and to reduce parasitic effects.

## Patentansprüche

1. Mehrfachantenne für ein Metallsuchgerät mit einer Mehrzahl von einzelnen Antennenelementen in der Form jeweils einer Schraubenlinienwicklung, die um einen zylindrischen Stützkörper gewickelt ist, über dessen gesamte Länge sich die Wicklung erstreckt, **dadurch gekennzeichnet, daß** die Antennenelemente Wicklungen (1,2,3) aufweisen, die um als Hohlzylinder (6,7,8) ausgebildete zylindrische Stützkörper herumgewickelt sind, wobei diese zylindrischen Stützkörper ineinander konzentrisch angeordnet sind, einzeln um ihre Längsachse drehbar sind und entlang dieser Längsachse verschiebbar sind und wobei die Sende- und/oder Empfangscharistika durch Positionieren jedes Hohlzylinders (6,7,8) gegenüber dem/den jeweils anderen in Umfangs- und/oder Verschieberichtung erfolgt, um die Suchfähigkeit des Metallsuchgerätes zu optimieren und Störeffekte zu reduzieren.

## Revendications

1. Une antenne de type multiple pour un détecteur de métaux comprenant une pluralité d'éléments d'antenne individuelles formés par un enroulement hélicoïdal enroulé sur un support cylindrique, caractérisée en ce que lesdits éléments d'antenne individuels ont des enroulements (1,2,3) enroulés sur des supports cylindriques constitués par des cylindres creux (6,7,8) qui sont disposés de façon sensiblement concentrique l'un dans l'autre, et que chacun des dites cylindres creux (6,7,8) tourne autour de son axe et/ou glisser le long du même axe, de façon que un réglage des caractéristiques de transmission et/ou de réception peut être obtenu par un déplacement angulaire et/ou un glissement de chaque cylindre creux par rapport à un(aux) autre(s), pour maximiser les capacités de détection du détecteur de métaux et pour réduire les effets parasites.
